# FASCICULE DE BREVET EUROPEEN

(11) **EP 1 169 876 B1**
(45) Date de publication et mention de la délivrance du brevet: **19.09.2007**
(21) Numéro de dépôt: 00915289.3
(22) Date de dépôt: 05.04.2000
(51) Int. Cl.: H04Q 7/38

(54) **PROCEDE ET SYSTEME DE FOURNITURE DE SERVICES A DES STATIONS MOBILES EN MODE ACTIF**
VERFAHREN UND SYSTEM ZUM BEREITSTELLEN VON DIENSTEN AN MOBILSTATIONEN IM AKTIVZUSTAND
METHOD AND SYSTEM FOR SUPPLYING SERVICES TO MOBILE STATIONS IN ACTIVE MODE

(30) Priorité: 09.04.1999 FR 9904470
(43) Date de publication de la demande: 09.01.2002
(73) Titulaire: Alcatel Lucent France, 75008 Paris (FR)
(72) Inventeur: MOULY, Michel, F-91120 Palaiseau (FR); FAUCONNIER, Denis, F-78470 Saint-Rémy-les-Chevreuse (FR)
(74) Mandataire: Ameline, Jean-Paul B.C.
(86) Numéro de dépôt international: PCT/FR2000/000846
(87) Numéro de publication internationale: WO 2000/062570

(56) Documents cités:
- WO-A-97/26764
- BRASCHE G ET AL: "CONCEPTS, SERVICES, AND PROTOCOLS OF THE NEW GSM PHASE 2+ GENERAL PACKET RADIO SERVICE" IEEE COMMUNICATIONS MAGAZINE,US,IEEE SERVICE CENTER. PISCATAWAY, N.J, vol. 35, no. 8, août 1997 (1997-08), page 94-104 XP000704443 ISSN: 0163-6804
- ETSI SMG: "DIGITAL CELLULAR TELECOMMUNICATIONS SYSTEM (PHASE 2+);POINT-TO-POINT (PP) SHORT MESSAGE SERVICE (SMS) SUPPORT ON MOBILE RADIO INTERFACE (GSM 04.11 VERSION 5.2.1)" EUROPEAN TELECOMMUNICATION STANDARD,ETS 300 942, septembre 1997 (1997-09), page 88 XP002125186 FRANCE
- M MOULY ET AL: "THE GSM SYSTEM FOR MOBILE COMMUNICATIONS" FR,LASSAY-LES-CHATEAUX, EUROPE MEDIA , 1993, pages 500-565, XP000860008 ISBN: 2-9507190-0-7

## Description

La présente invention concerne le domaine des radiocommunications avec les mobiles.

Elle s'applique à des réseaux dans lesquels l'infrastructure est répartie entre d'une part un coeur de réseau, qui gère les données et états relatifs aux abonnés mobiles et qui fournit les interfaces appropriées avec les réseaux de transport fixes, et d'autre part un réseau d'accès comportant des relais radio, ou stations de base, et leurs équipements de contrôle pour gérer les ressources radio employées.

L'invention s'applique notamment à des réseaux cellulaires. Dans le cas des systèmes GSM et dérivés, le réseau d'accès est appelé sous-système des stations de base (BSS), et le coeur de réseau inclut les commutateurs du service mobile (MSC, « Mobile Switching Center ») pour les communications en mode circuit et les noeuds de support GPRS (GSN, « GPRS Support Node ») pour les transmissions par paquets (GPRS, « General Packet Radio Service »). L'invention est également applicable à des réseaux cellulaires de troisième génération, tels que l'UMTS (« Universal Mobile Telecommunications System »).

On suppose qu'une station mobile (considérée comme la combinaison de l'équipement ou terminal mobile et des abonnements sur lesquels il agit) est essentiellement caractérisée dans le réseau d'accès par son état actif ou inactif.

Lorsqu'une station mobile est inactive pour le réseau d'accès, celui-ci ne mémorise aucune donnée spécifique relative à cette station mobile. Une station mobile est ainsi considérée comme inactive lorsqu'elle est éteinte, ou lorsqu'elle est allumée mais hors de portée d'une station de base. Un autre cas de station mobile inactive est celui d'une station en veille, dans lequel la station est allumée et à portée d'une ou plusieurs stations de base mais sans que ceci soit pris en compte par le réseau d'accès. En mode veille, une station mobile surveille notamment des canaux de diffusion sur lesquels les stations de base émettent des signaux de balise, afin que soit déterminée la meilleure station de base avec laquelle elle est susceptible de communiquer. Elle peut d'autre part se faire rendre un certain nombre de services, parmi lesquels on peut citer le « paging », par lequel le coeur de réseau s'enquiert de la disponibilité d'une station mobile et lui commande éventuellement d'adopter un certain comportement (par exemple en vue de l'établissement d'une communication), ou encore la diffusion de messages courts (SMS-CB, « Short Message Service - Cell Broadcast »), etc.. Pour fournir de tels services aux stations mobiles en veille, pour lesquelles il ne dispose d'aucune information, le réseau d'accès utilise des ressources de communication (généralement des canaux radio de diffusion) partagées avec un certain nombre d'autres stations mobiles, également inconnues du réseau d'accès. Le service sera rendu si la station mobile se trouve effectivement en veille dans une cellule dont la station de base aura utilisé les ressources en question.

En mode actif, un contexte relatif à la station mobile est pris en compte dans le réseau d'accès. Une partie de ce contexte se rapporte aux moyens particuliers de communication alloués à cette station mobile (ressources d'accès physique, ou adresses dans le cas de ressources partagées). Dans le cas du GSM, ceci correspond au mode connecté pour une connexion avec un MSC, et au mode actif du GPRS pour une communication avec un SGSN (« Serving GSN »).

Il se pose le problème de la continuité de la fourniture des services normalement rendus aux stations mobiles en veille lorsque celles-ci se trouvent en mode actif. A priori, on peut prévoir d'allouer ou d'utiliser des canaux ou sous-canaux dédiés pour échanger les informations concernant ces services. Ceci nécessite une certaine coordination pour gérer les différentes informations échangées avec la station mobile.

Certains des services du mode veille ne sont simplement pas fournis en mode actif, comme par exemple le service SMS-CB dans les réseaux GSM connus.

Dans certains cas, la coordination incombe au coeur de réseau. Avec un commutateur unique, cela signifie qu'il doit assurer la fourniture des services du mode veille aux stations mobiles actives. Avec plusieurs commutateurs, cela implique qu'ils coopèrent dans ce but. Un exemple en est décrit dans WO97/26764 pour le service de notification d'appels GSM entrants à destination de terminaux en mode actif du GPRS. Ce type de coordination est très difficile à appliquer dans un environnement hétérogène. C'est en particulier problématique dans le cas du GSM depuis que des GSN ont été ajoutés aux MSC, puisque le support de protocoles de communication entre les MSC et les GSN n'est pas obligatoire. C'est en outre une méthode très complexe puisqu'elle impose que les commutateurs connaissent la configuration de l'infrastructure et en gèrent les conséquences.

La coordination peut encore incomber aux stations mobiles. Dans le cas du service de paging en GSM, c'est la solution principalement adoptée jusqu'à présent pour que le service puisse être fourni par un MSC pour une station mobile en communication avec un SGSN, ou par un SGSN pour une station mobile en communication avec un MSC. La station mobile doit alors écouter des ressources de mode veille, typiquement des canaux de diffusion, alors qu'elle se trouve par ailleurs en mode actif. Ce type de solution conduit à des stations mobiles complexes et coûteuses, et à une utilisation non indispensable des précieuses ressources d'accès.

Un but de la présente invention est de fournir une solution simple au problème de la continuité de la fourniture des services de type mode veille, et que cette solution soit aisément compatible avec diverses organisations du réseau.

L'invention propose ainsi un procédé de fourniture de services à des stations mobiles depuis une infrastructure de radiocommunication comportant d'une part un coeur de réseau comprenant des commutateurs et des moyens de gestion d'abonnés, et d'autre part un réseau d'accès comprenant un ensemble de stations de base capables de communiquer par radio avec les stations mobiles et des moyens de contrôle des stations de base. Des messages relevant d'au moins un service fourni en relation avec des stations mobiles en mode veille sont transmis par au moins une des stations de base à destination d'au moins une station mobile en mode actif si les informations de gestion mémorisées pour ladite station mobile incluent des références relatives au service dont relèvent lesdits messages de service
Les références en question sont reçues par les moyens de contrôle lors d'une procédure d'établissement ayant fait passer la station mobile en mode actif.

Au moins certains des messages peuvent en outre être diffusés par au moins une des stations de base pour être reçus par des stations mobiles en mode veille.

Au moment où la station mobile entre en mode actif, le réseau d'accès est informé des services de type mode veille qui doivent lui être fournis ou continuer à lui être fournis. Lorsqu'il y a lieu d'émettre un message relevant d'un tel service, le réseau d'accès examine si ce message concerne une station mobile active, et le cas échéant transmet le message d'une manière adaptée à l'état actif, par exemple sur une ressource dédiée. Pour cela, il n'est pas utile d'établir un dialogue avec le commutateur, ni d'utiliser une ressource radio de diffusion.

Pour un ou plusieurs des services, les références mémorisées dans le réseau d'accès peuvent comprendre une adresse identifiant la station mobile active concernée, ou un groupe de stations mobiles auquel elle appartient. Une adresse de ce type est incluse par le commutateur à l'origine d'un message de service pour que les moyens de contrôle du réseau d'accès en commandent la diffusion et/ou la transmission vers la station mobile. Les moyens de contrôle recevant le message du commutateur examinent s'ils connaissent l'adresse incluse dans le message comme faisant partie des références relatives au service pour une station mobile active. Dans l'affirmative, le message est transmis à la station mobile d'une manière adaptée à l'état actif, par exemple sur une ressource dédiée. Sinon, il est simplement diffusé pour que la station mobile puisse éventuellement le capter si elle est en veille.

Certains autres messages de service peuvent ne pas être spécifiquement destinés à une station mobile (par exemple SMS-CB). De tels messages seront généralement à la fois diffusés par la station de base et transmis à chaque station mobile active pour laquelle les moyens de contrôle de la station de base mémorisent des références relatives au service en question.

Le procédé selon l'invention est bien adapté au cas où une même station mobile comporte un équipement mobile supportant plusieurs abonnements. Dans ce cas, lorsque la station mobile est active à l'égard de l'un de ces abonnements, lesdits messages transmis par la station de base à destination de la station mobile peuvent comprendre des messages relevant d'au moins un service rattaché à un autre de ces abonnements. Il suffit que les autres abonnements soient identifiés parmi les références fournies aux moyens de contrôle au cours de la procédure d'établissement.

Dans un mode de réalisation avantageux, la station mobile en mode actif recevant un message relevant d'un des services retourne une réponse à ce message sur une ressource de communication établie au cours de la procédure d'établissement. Ceci évite d'utiliser un canal de signalisation commun alors qu'une ressource du mode actif est disponible.

Un autre aspect de la présente invention se rapporte à un équipement d'un réseau d'accès d'une infrastructure de radiocommunication, comprenant des moyens de contrôle d'au moins une station de base du réseau d'accès, les moyens de contrôle comprenant des moyens de supervision de liens radio agencés pour mémoriser des informations respectivement associées à des stations mobiles en mode actif desservies par la station de base, et des moyens pour commander la diffusion par la station de base de messages relevant d'au moins un service fourni en relation avec des stations mobiles en mode veille, pour lesquelles les moyens de supervision des liens radio ne mémorisent pas d'informations. Selon l'invention, les informations à mémoriser par les moyens de supervision de liens radio comprennent, pour au moins une station mobile en mode actif, une liste de références relatives à des services fournis en relation avec des stations mobiles en mode veille, cette liste étant adressée aux moyens de supervision de liens radio dans une procédure d'établissement faisant passer la station mobile en mode actif. L'équipement comprend en outre des moyens pour commander l'émission par la station de base, spécifiquement à destination d'une station mobile en mode actif pour laquelle les moyens de supervision de liens radio mémorisent une liste de références, de messages relevant de services auxquels se rapportent des références de ladite liste.

Un troisième aspect de la présente invention se rapporte à une station mobile de radiocommunication dans une infrastructure de radiocommunication comportant d'une part un coeur de réseau et d'autre part un réseau d'accès, caractérisée en ce qu'elle comprend des moyens pour émettre, vers l'infrastructure de radiocommunication lors d'une procédure d'établissement faisant passer ladite station mobile en mode actif, une liste de références relatives à des services fournis en relation avec des stations mobiles en mode veille, afin que le réseau d'accès de l'infrastructure puisse en tenir compte pour transmettre à destination de la station mobile en mode actif des messages relevant de services pour lesquels des références figurent dans la liste.

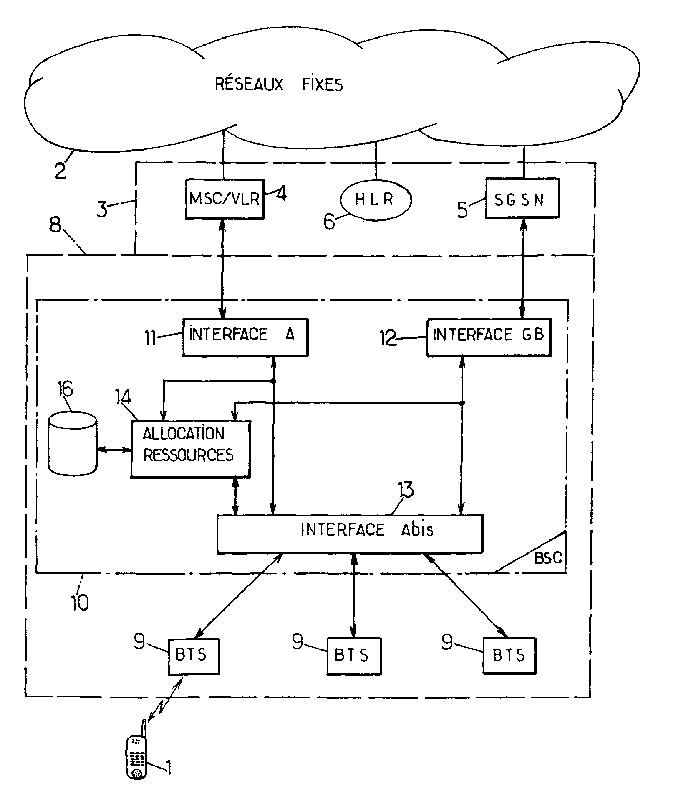

D'autres particularités et avantages de la présente invention apparaîtront dans la description ci-après d'exemples de réalisation non limitatifs, en référence au dessin annexé, dans lequel la figure unique est un schéma d'une infrastructure de réseau GSM dans laquelle l'invention peut être mise en oeuvre.

Cette figure montre l'architecture fonctionnelle de l'infrastructure permettant aux stations mobiles GSM 1 de communiquer avec des réseaux fixes 2.

Le coeur de réseau 3 comprend des commutateurs 4, 5 appelés MSC dans le cas du service traditionnel en mode circuit, et SGSN dans le cas du service en mode paquet (GPRS). Le coeur de réseau 3 comprend également des bases de données pour la gestion des abonnés, comprenant un ou plusieurs registres nominaux 6, appelés HLR (« Home Location Register »), et des registres de visiteurs ou VLR (« Visitor Location Register »), fréquemment associés à des commutateurs.

Les différentes unités 4-6 du coeur de réseau 3 peuvent communiquer entre elles au moyen des réseaux fixes de support 2.

Le réseau d'accès (BSS) 8 comprend les stations de base (BTS) 9 réparties sur le territoire de couverture, et dont les portées radio définissent les cellules du réseau. Les BTS 9 fournissent l'interface radio avec les stations mobiles 1. Le BSS 8 comprend également des équipements 10 appelés BSC (« Base Station Controller ») qui contrôlent chacun une ou plusieurs BTS 9 par l'intermédiaire d'une interface dite *Abis.*

Chaque BSC 10 est relié à un MSC 4 par l'intermédiaire d'une interface dite A. Chaque BSC contrôlant une zone où le service en mode paquet est fourni par l'opérateur est en outre relié à un SGSN 5 par l'intermédiaire d'une interface dite GB.

La figure schématise également l'organisation fonctionnelle d'un BSC 10. Les références 11, 12, 13 désignent respectivement les unités du BSC gérant les échanges sur les interfaces A, GB et *Abis.*

Une fonction importante du BSC est la supervision des liens radio entre les BTS 9 et les stations mobiles 1. La mise en oeuvre de cette fonction implique notamment un module 14 d'allocation de ressources radio, qui analyse les informations et commandes reçues sur les interfaces A, GB et *Abis,* et applique les procédures pertinentes (allocation, contrôle de puissance, saut de fréquence, handover...) pour commander les BTS 9 par l'intermédiaire de l'interface Abis. En particulier, le module 14, qui fonctionne en liaison avec une base de données locale 16 détermine au moyen de quels canaux radio physiques et/ou logiques les signaux ou informations devront être acheminés jusqu'aux stations mobiles.

Ces canaux sont des ressources dédiées dans le cas de la transmission de l'information vers une ou plusieurs stations mobiles données, qui sont alors considérées comme étant en mode actif, ou des canaux de diffusion dans le cas de stations mobiles inactives pour lesquelles la base de données locale 16 ne contient aucune information particulière.

Pour chaque station mobile active à l'égard d'une BTS qu'il contrôle, le BSC mémorise dans sa base de données 16 un contexte incluant l'identification de moyens utilisables pour communiquer spécifiquement avec cette station. Ces moyens sont typiquement une BTS 9 et une ressource d'accès radio avec cette BTS (fréquence et index d'intervalle de temps dans le cas d'une station mobile active en mode circuit avec un MSC, ou adresse d'acheminement dans le cas d'une station mobile active en mode paquet avec un SGSN). Leur allocation est décidée par le module 14 lors d'une procédure d'établissement d'une connexion en mode circuit (cas MSC) ou d'une connexion virtuelle en mode paquet (cas SGSN).

Une BTS doit parfois communiquer des messages de service à des stations mobiles non actives du point de vue de son BSC, c'est-à-dire pour lesquelles la base de données 16 ne contient pas d'information. Ces messages s'inscrivent dans le cadre de services fournis à des stations mobiles en veille. Si la station mobile est effectivement en veille dans une cellule où le message est diffusé, elle recevra l'information qu'il contient et pourra le cas échéant adopter une réponse appropriée.

Certains de ces messages de service peuvent être spécifiquement destinés à une station mobile (paging par exemple) ou à un groupe de stations mobiles (appels de groupe par exemple). Dans ce cas, le message de commande correspondant reçu du MSC ou du SGSN inclut une adresse désignant la station mobile ou le groupe destinataire. Le message de service diffusé par la station de base inclut également cette adresse, éventuellement traduite sous une autre forme, afin que la ou les stations mobiles destinataires puissent interpréter le message comme leur étant destiné si elles se trouvent en veille à portée de la station de base.

D'autres messages de service n'ont pas de destinataire spécifique et sont simplement diffusés sur des canaux radio communs (SMS-CB par exemple) pour pouvoir être reçus par les stations mobiles en veille intéressées par le service.

Conformément à l'invention, on prévoit que dans la procédure d'établissement, par laquelle une station mobile passe au mode actif, une liste de références relatives à des services du mode veille soit fournie au BSC. Cette liste peut être vide ou comporter des références relatives à un ou plusieurs services qui doivent continuer à être fournis à la station mobile. Ensuite, la station mobile étant active, s'il convient de lui délivrer un message relevant d'un tel service référencé dans la liste, le BSC commandera la BTS pour que le message soit transmis à la station mobile sur une ressource dédiée. Ainsi, c'est le réseau d'accès, plus particulièrement le BSC, qui se charge de coordonner la fourniture des services du mode veille aux stations mobiles actives.

La liste de références relatives aux services fait partie du contexte que la base de données 16 mémorise relativement à chaque station mobile active.

Dans le cas d'un service dont les messages sont spécifiquement destinés à une station mobile active (ou à un groupe de stations mobiles dont elle fait partie), les références mémorisées par le BSC pour une telle station mobile comprennent, implicitement ou explicitement, l'adresse désignant la station mobile ou le groupe en question.

Pour illustrer ceci, on considère le cas du service de paging dans les réseaux GSM.

Une requête de paging d'une station mobile, transmise par le MSC ou le SGSN au BSC sur l'interface A ou GB, contient, en plus d'une indication de la zone géographique où on s'attend à trouver la station mobile, deux paramètres d'identification qui sont : (i) une partie du message radio de paging à diffuser pour que la station mobile pertinente se reconnaisse comme destinataire ; et (ii) un paramètre permettant de déterminer quelles ressources de diffusion sont surveillées par la station mobile pour recevoir d'éventuels messages de paging. Dans les spécifications GSM actuelles publiées par l'ETSI, le premier paramètre est l'identité temporaire de l'abonné mobile (TMSI), ou son équivalent pour le mode paquet (P-TMSI), ou parfois l'identité permanente de l'abonné mobile (IMSI, « International Mobile Subscriber Identity »). Le second paramètre est l'IMSI qui, par une formule arithmétique, permet de déterminer les sous-canaux de paging que la station mobile écoute.

Utiliser le premier paramètre comme adresse mémorisée par le BSC pour le service de paging n'est pas une bonne solution puisque différentes formes de ce premier paramètre sont susceptibles d'être utilisées par le commutateur à l'origine de la requête.

On peut envisager d'utiliser le second paramètre comme adresse de paging mémorisée. Dans les spécifications actuelles, ce serait alors l'IMSI, qui identifie de manière univoque la station mobile.

L'adresse de paging pourrait enfin être un paramètre supplémentaire à insérer par les commutateurs dans leurs requêtes de paging. Il se peut que ce paramètre supplémentaire coïncide avec l'un des deux précédents, mais non systématiquement. L'IMSI est un bon choix pour ce paramètre supplémentaire. Dans ce cas, avec les spécifications GSM actuelles, il n'y a pas de différence par rapport au cas précédent où on utilise le second paramètre identifiant les ressources de diffusion que la station mobile surveille. Mais dans d'autres systèmes, ou dans l'hypothèse d'une modification des spécifications GSM sur le sujet, le recours à l'IMSI en tant que paramètre supplémentaire doit être mentionné comme bien adapté. Du point de vue du codage du message de requête par le MSC ou le SGSN, il n'est pas nécessaire de dupliquer les identités, une courte indication (par exemple un ou deux bits) pouvant être simplement insérée dans ce message pour distinguer les cas où « l'adresse de paging » coïncide avec la valeur d'un autre champ du message de ceux où elle est fournie explicitement.

A réception de la requête, le BSC récupère l'adresse de paging puis examine si cette adresse figure dans sa base de données 16 parmi les références relatives au service de paging pour une station mobile active. Dans l'affirmative, le BSC commande la BTS avec lequel la station mobile active communique pour qu'elle lui transmette le message de paging sur une ressource dédiée (par exemple un canal de signalisation associé de type SACCH). Le message de paging n'est alors pas diffusé. Sinon, la station mobile destinataire est inactive, et le message de paging est diffusé normalement.

Lorsque le message de paging est transmis à la station mobile en mode actif en utilisant une ressource dédiée dans le sens descendant (par exemple un canal SACCH descendant), la station mobile peut, lorsqu'une réponse est requise, retourner cette réponse en utilisant symétriquement une ressource dédiée correspondante déjà établie dans le sens montant (par exemple un canal SACCH montant). Dans ce cas, le BSC est adapté pour être capable d'acheminer vers des commutateurs différents des flux distincts reçus sur un même canal logique de signalisation.

Pour le service de notification d'appels de groupe, la façon d'assurer la continuité du service pour les mobiles actifs est essentiellement la même que pour le service de paging, l'adresse utilisée pour le service étant une identité de groupe explicite qui ne fait pas nécessairement partie du message de notification à diffuser. Toutefois, le message de notification est également diffusé par le réseau d'accès pour éventuellement pouvoir être reçu par d'autres stations mobiles en veille faisant partie du groupe.

D'autres services normalement fournis aux stations mobiles en veille n'impliquent pas l'émission de messages radio destinés spécifiquement à une ou plusieurs stations mobiles, comme par exemple le service SMS-CB ou la diffusion d'informations servant à la gestion système (SYSINFO).

Selon l'invention, ces messages restent diffusés par le réseau d'accès en toutes circonstances, mais ils peuvent également faire l'objet d'une transmission vers les mobiles actifs pour lesquels le réseau d'accès mémorise les références pertinentes.

Pour ces services, les références de la liste mémorisée pour les stations mobiles actives ne comprendra pas nécessairement une adresse. On peut également utiliser une valeur d'adresse par défaut désignant toutes les stations mobiles. Si les messages relevant d'un tel service sont destinés à certains abonnés seulement, typiquement ceux qui ont souscrit au service, on peut mémoriser une adresse servant à distinguer les mobiles de ces abonnés, ce qui évite la transmission des messages vers des stations mobiles non concernées. Dans ce dernier cas, la solution ressemble à celle exposée ci-dessus pour les notifications d'appels de groupe.

Dans un premier mode de réalisation de l'invention, la liste de références relatives aux services fait partie des données d'abonné gérées par le coeur de réseau. Elle peut alors être mémorisée dans le HLR et le VLR. Le commutateur 4,5 la fournit au BSC 10 au cours de la procédure d'établissement quand la station mobile devient active. Il convient alors d'aménager la procédure d'établissement au niveau des interfaces *A* et *GB* afin de prévoir la fourniture de cette liste dans l'un des messages transmis par le commutateur.

En variante, on peut prévoir qu'au moment de l'établissement, le BSC interroge un serveur dédié à la fourniture de ces références en identifiant la station mobile concernée. Ce serveur répond à une telle interrogation en retournant les données pertinentes.

Dans un autre mode de réalisation de l'invention, la station mobile devenant active fournit elle-même la liste de références aux services et les adresses correspondantes au cours de la procédure d'établissement. Cette solution consomme des ressources de transmission radio, mais elle présente plusieurs avantages : il suffit de ne conserver la liste qu'à un endroit (le module d'abonné SIM de la station mobile) et non à différents sites du coeur de réseau ; la liste peut être modifiée dynamiquement par l'utilisateur (par exemple selon qu'il accepte ou non d'être dérangé par tel ou tel service en cours de communication) sans que ceci nécessite de signalisation ; l'ajout de nouveaux services de type mode veille n'a d'impact que sur des équipements directement concernés par ces nouveaux services.

Revenant à l'exemple des spécifications GSM actuelles, chaque station mobile fournit déjà une identité au cours de l'établissement d'une connexion, dans le message SABM. Cette identité est formée, selon les circonstances, par le TMSI, le P-TMSI, l'IMSI ou l'IMEI (« International Mobile Equipment Identity »). Elle est utilisée par le commutateur 4,5 pour identifier de manière unique la station mobile, et par le BSS 8 pour résoudre les conflits entre mobiles sur les canaux d'accès aléatoire. En fait, le BSS n'identifie pas le mobile sur cette base : il copie simplement dans le message UA retourné l'identité contenue dans le message SABM traité, afin que les éventuelles stations mobiles en conflit sachent que leur accès aléatoire n'a pas été pris en compte.

On peut envisager que le BSC mémorise cette identité comme adresse pour le paging (ou d'autres services). Mais ceci n'est acceptable que si la même adresse est effectivement incluse dans les requêtes de paging envoyées par les commutateurs aux BSC, ce qui n'est pas toujours le cas. Cette approche laisse subsister des cas où les messages de paging ne sont pas transmis aux stations mobiles actives (par exemple paging issu d'un SGSN alors que le mobile est en communication avec un MSC).

Une autre solution est que, le cas échéant, la station mobile fournisse son adresse de paging de manière indépendante des caractéristiques actuelles de la procédure d'accès aléatoire. On peut alors utiliser toute adresse appropriée, notamment l'IMSI qui, on l'a vu, est un bon choix du point de vue du réseau. Avantageusement, cette adresse sera fournie par la station mobile sous forme chiffrée, par exemple comme donnée incluse dans le message CIPHER_MODE_COMPLETE qui, dans la procédure d'établissement normalisée (GSM 04.08), est souvent le premier message émis par la station mobile sous forme chiffrée. A réception de ce message, le BSC le déchiffre, récupère l'adresse de paging et la stocke dans la base de données 16. En variante, l'adresse pourrait être transmise par le mobile dans un nouveau message, de préférence non prioritaire afin de ne pas retarder l'établissement de la connexion.

Les caractéristiques de l'invention sont bien adaptées au cas où plusieurs abonnés utilisent le même équipement mobile (SIM multiples, ou SIM supportant des abonnements différents). La liste de références est alors l'union des listes relatives aux services rattachés aux différents abonnements. Ceci assure notamment qu'un message de paging d'un abonné puisse être reçu alors que la station mobile est active pour un autre abonné.

L'invention s'applique indépendamment de la nature des noeuds du coeur de réseau requérant du réseau d'accès des services de mode actif et des services de mode veille, et quelle que soit la multiplicité de ces noeuds. Elle convient notamment lorsque des noeuds de coeur de réseau gérés par différents opérateurs sont reliés au même réseau d'accès, particulièrement dans le cas où les listes de références sont fournies par les stations mobiles.

## Revendications

1. Procédé de fourniture de services à des stations mobiles depuis une infrastructure de radiocommunication comportant d'une part un coeur de réseau (3) comprenant des commutateurs (4,5) et des moyens (6) de gestion d'abonnés, et d'autre part un réseau d'accès (8) comprenant un ensemble de stations de base (9) capables de communiquer par radio avec les stations mobiles (1) et des moyens (10) de contrôle des stations de base mémorisant des informations de gestion de liens radio pour des stations mobiles en mode actif, **caractérisé en ce que** des messages relevant d'au moins un service fourni en relation avec des stations mobiles en mode veille sont transmis par au moins une des stations de base à destination d'au moins une station mobile en mode actif si les informations de gestion mémorisées pour ladite station mobile incluent des références relatives au service dont relèvent lesdits messages de service, lesdites références étant reçues par les moyens de contrôle lors d'une procédure d'établissement ayant fait passer la station mobile en mode actif.

2. Procédé selon la revendication 1, dans lequel au moins certains desdits messages sont en outre diffusés par au moins une des stations de base pour être reçus par des stations mobiles en mode veille.

3. Procédé selon la revendication 1 ou 2, dans lequel les références relatives à au moins un des services sont fournies aux moyens de contrôle (10) depuis ladite station mobile (1) par l'intermédiaire d'un lien radio de signalisation avec la station de base (9).

4. Procédé selon la revendication 3, dans lequel les références relatives à au moins un des services sont fournies sous forme chiffrée par la station mobile.

5. Procédé selon l'une quelconque des revendications 1 à 4, dans lequel les références relatives à au moins un des services sont fournies aux moyens de contrôle (10) depuis un commutateur (4,5) du coeur de réseau (3).

6. Procédé selon l'une quelconque des revendications 1 à 5, dans lequel les références relatives à au moins un des services sont fournies aux moyens de contrôle (10) en réponse à une interrogation d'un serveur faite en identifiant ladite station mobile (1).

7. Procédé selon l'une quelconque des revendications 1 à 6, dans lequel, les références relatives à au moins un des services pour une station mobile comprennent une adresse identifiant la station mobile en mode actif (1) ou un groupe de stations mobiles auquel elle appartient, et dans lequel ladite adresse est incluse par un commutateur (4,5) du coeur de réseau (3) dans un message envoyé aux moyens de contrôle (10) pour commander la diffusion et/ou la transmission d'un message relevant dudit service.

8. Procédé selon la revendication 7, dans lequel les messages relevant d'au moins un service pour lequel les moyens de contrôle (10) de la station de base mémorisent des références comprenant une adresse sont transmis par la station de base (9) à ladite station mobile en mode actif (1) sans être diffusés.

9. Procédé selon l'une quelconque des revendications 1 à 8, dans lequel les messages relevant d'au moins un des services sont à la fois diffusés par la station de base (9) et transmis à chaque station mobile en mode actif (1) pour laquelle les moyens de contrôle (10) de la station de base mémorisent des références relatives audit service.

10. Procédé selon l'une quelconque des revendications 1 à 9, dans lequel ladite station mobile en mode actif (1) comporte un équipement mobile supportant plusieurs abonnements, et dans lequel, la station mobile étant active à l'égard de l'un desdits abonnements, lesdits messages transmis par la station de base (9) à destination de la station mobile comprennent des messages relevant d'au moins un service rattaché à un autre desdits abonnements.

11. Procédé selon l'une quelconque des revendications 1 à 10, dans lequel ladite station mobile en mode actif (1) recevant un message relevant d'un des services retourne une réponse audit message sur une ressource de communication établie au cours de la procédure d'établissement ayant fait passer la station mobile en mode actif.

12. Equipement d'un réseau d'accès (8) d'une infrastructure de radiocommunication, comprenant des moyens (10) de contrôle d'au moins une station de base du réseau d'accès (8), les moyens de contrôle comprenant des moyens (14,16) de supervision de liens radio agencés pour mémoriser des informations respectivement associées à des stations mobiles en mode actif (1) desservies par la station de base (9), et des moyens pour commander la diffusion par la station de base de messages relevant d'au moins un service fourni en relation avec des stations mobiles en mode veille, pour lesquelles les moyens de supervision des liens radio ne mémorisent pas d'informations, **caractérisé en ce que** les informations à mémoriser par les moyens de supervision de liens radio comprennent, pour au moins une station mobile en mode actif, une liste de références relatives à des services fournis en relation avec des stations mobiles en mode veille, cette liste étant adressée aux moyens de supervision de liens radio dans une procédure d'établissement faisant passer la station mobile en mode actif, et **en ce qu'**il comprend en outre des moyens pour commander l'émission par la station de base, spécifiquement à destination d'une station mobile en mode actif pour laquelle les moyens de supervision de liens radio mémorisent une liste de références, de messages relevant de services auxquels se rapportent des références de ladite liste.

13. Equipement selon la revendication 12, dans lequel, pour au moins un des services, les références mémorisées comprennent une adresse identifiant la station mobile en mode actif (1) ou un groupe de stations mobiles auquel elle appartient, et dans lequel les moyens de supervision (14,16) sont agencés pour recevoir d'un commutateur (4,5) d'un coeur de réseau (3) de l'infrastructure de radiocommunication, des messages de commande concernant ledit service incluant chacun une adresse comparable aux adresses mémorisées, et pour commander la transmission d'un message relevant dudit service en cas de concordance entre l'adresse incluse dans un message de commande reçu et l'adresse mémorisée identifiant la station mobile en mode actif.

14. Equipement selon la revendication 13, dans lequel ladite adresse est une identité permanente d'abonné mobile (IMSI).

15. Equipement selon l'une quelconque des revendications 12 à 14, dans lequel, ladite station mobile en mode actif (1) comportant un équipement mobile supportant plusieurs abonnements, et étant active à l'égard de l'un desdits abonnements, lesdits messages transmis par la station de base (9) spécifiquement à destination de la station mobile comprennent des messages relevant d'au moins un service rattaché à un autre desdits abonnements.

16. Station mobile de radiocommunication (1) dans une infrastructure de radiocommunication comportant d'une part un coeur de réseau (3) et d'autre part un réseau d'accès (8), **caractérisée en ce qu'**elle comprend des moyens pour émettre, vers l'infrastructure de radiocommunication lors d'une procédure d'établissement faisant passer ladite station mobile en mode actif, une liste de références relatives à des services fournis en relation avec des stations mobiles en mode veille, afin que le réseau d'accès (8) de l'infrastructure puisse en tenir compte pour transmettre à destination de la station mobile en mode actif des messages relevant de services pour lesquels des références figurent dans la liste ; et **en ce qu'**elle est adaptée à la fourniture de services conformément à un procédé selon la revendication 3 ou 4.

17. Station mobile selon la revendication 16, dans laquelle les références relatives à au moins un des services comprennent une adresse, pour que le réseau d'accès (8) puisse comparer cette adresse à une adresse qu'il reçoit dans une requête d'émission d'un message relevant du service référencé afin que le message soit transmis en cas de concordance des adresses.

18. Station mobile selon la revendication 17, dans laquelle ladite adresse est une identité permanente d'abonné mobile (IMSI).

19. Station mobile selon l'une quelconque des revendications 16 à 18, dans laquelle lesdits moyens sont agencés pour chiffrer la liste de références émise.

## Claims

1. A method for providing services to mobile stations from a radiocommunication infrastructure including on the one hand a core network (3) comprising switches (4, 5) and subscriber management means (6), and on the other hand an access network (8) comprising a plurality of base stations (9) capable of communicating by radio with the mobile stations (1) and base station control means (10), storing radio link management information for mobile stations in active mode, **characterized in that** messages pertaining to at least one service provided in relation with mobile stations in idle mode are transmitted by at least one of the base stations to at least one mobile station in active mode if the management information stored for said mobile station includes references relating to the service to which said service messages pertain, said references being received by the control means during a setup procedure which has caused the mobile station to enter the active mode.

2. The method as claimed in claim 1, wherein at least some of said messages are further broadcast by at least one of the base stations to be received by some mobile stations in idle mode.

3. The method as claimed in claim 1 or 2, wherein the references relating to at least one of the services are provided to the control means (10) form said mobile station (1) through a signalling radio link with the base station (9).

4. The method as claimed in claim 3, wherein the references relating to at least one of the services are provided in enciphered form by the mobile station.

5. The method as claimed in any one of claims 1 to 4, wherein the references relating to at least one of the services are provided to the control means (10) from a switch (4, 5) of the core network (3).

6. The method as claimed in any one of claims 1 to 5, wherein the references relating to at least one of the services are provided to the control means (10) in response to a request from a server that carries an identification of said mobile station (1).

7. The method as claimed in any one of claims 1 to 6, wherein the references relating to at least one of the services for a mobile station comprise an address identifying the mobile station in active mode (1) or a group of mobile stations to which it belongs, and wherein said address is included by a switch (4, 5) of the core network (3) in a message sent to the control means (10) to control the broadcasting and/or transmission of a message pertaining to said service.

8. The method as claimed in claim 7, wherein the messages pertaining to at least one service for which the control means (10) of the base station store references comprising an address are transmitted by the base station (9) to said mobile station in active mode (1) without being broadcast.

9. The method as claimed in any one of claims 1 to 8, wherein the messages pertaining to at least one of the services are broadcast by the base station (9) and also transmitted to each mobile station in active mode (1) for which the base station control means (10) store references relating to said service.

10. The method as claimed in any one of claims 1 to 9, wherein said mobile station in active mode (1) comprises a mobile equipment supporting a plurality of subscriptions, and wherein, the mobile station being active with regard to one of said subscriptions, said messages transmitted by the base station (9) towards the mobile station comprise messages pertaining to at least one service affiliated to another of said subscriptions.

11. A method as claimed in any one of claims 1 to 10, wherein the mobile station in active mode (1) receiving a message pertaining to one of the services returns a response to said message on a communication resource set up during the setup procedure which has caused the mobile station to enter the active mode.

12. An access network equipment (8) for a radiocommunication infrastructure, comprising means (10) for controlling at least one base station of the access network (8), the control means comprising radio link supervision means (14, 16) adapted to store pieces of information respectively associated with mobile stations in active mode (1) served by the base station (9), and means for controlling the broadcasting by the base station of messages pertaining to at least one service provided in connection with mobile stations in idle mode, for which the radio link supervision means do not store any information, **characterized in that** the information to be stored by the radio link supervision means comprise, for at least one mobile station in active mode, a list of references relating to services provided in connection with mobile stations in idle mode, said list being addressed to the radio link supervision means in a setup procedure causing the mobile station to enter the active mode, and **in that** it further comprises means for controlling transmission by the base station, specifically towards a mobile station in active mode for which the radio link supervision means store a list of references, of messages pertaining to services to which references from said list refer.

13. The equipment as claimed in claim 12, wherein, for at least one of the services, the stored references comprise an address identifying the mobile station in active mode (1) or a group of mobile stations to which it belongs, and wherein the supervision means (14,16) are adapted to receive from a switch (4, 5) of a core network (3) of the radiocommunication infrastructure, control messages regarding said service each including an address comparable with the stored addresses, and to control the transmission of a message pertaining to said service when the address included in a control message received matches the stored address identifying the mobile station in active mode.

14. The equipment as claimed in claim 13, wherein said address is a permanent mobile subscriber identity (IMSI).

15. The equipment as claimed in any one of claims 12 to 14, wherein, said mobile station in active mode (1) comprising a mobile equipment supporting a plurality of subscriptions, and being active with regard to one of said subscriptions, said messages transmitted by the base station (9) specifically towards the mobile station comprise messages pertaining to at least one service affiliated to another one of said subscriptions.

16. A mobile radiocommunication station (1), in a radiocommunication infrastructure including on the one hand a core network (3) and on the other hand an access network (8), **characterized in that** it comprises means for transmitting, to a radiocommunication infrastructure during a setup procedure which causes said mobile station to enter an active mode, a list of references relating to services provided in relation with mobile stations in an idle mode, so that the access network (8) of the infrastructure can take account thereof to transmit towards the mobile station in active mode messages pertaining to services for which references appear in the list, and **in that** it is adapted to the provision of services in accordance with a method as claimed in claim 3 or 4.

17. The mobile station as claimed in claim 16, wherein the references relating to at least one of the services comprise an address, so that the access network (8) can compare said address with an address which it receives in a request to send a message pertaining to the referenced service so that the message is transmitted when the addressed match.

18. The mobile station as claimed in claim 17, wherein said address is a permanent mobile subscriber identity (IMSI).

19. The mobile station as claimed in any one of claims 16 to 18, wherein said means are adapted to encipher the transmitted list of references.

## Patentansprüche

1. Verfahren zum Bereitstellen von Diensten für Mobilstationen ausgehend von einer Funkinfrastruktur, die einerseits einen Netzwerkkern (3) aufweist, der Umschalter (4, 5) und Mittel (6) zum Verwalten von Abonnenten aufweist, und andererseits ein Zugangsnetz (8), das eine Einheit Basisstationen (9) aufweist, die per Funk mit den Mobilstationen (1) kommunizieren können, und Mittel (10) zum Steuern der Basisstationen, die Verwaltungsinformationen von Funkverbindungen für Mobilstationen im Aktivzustand speichern, **dadurch gekennzeichnet, dass** Mitteilungen, die von mindestens einem Dienst abhängen, der in Zusammenhang mit Mobilstationen in Standbyzustand geliefert wird, von mindestens einer der Basisstationen in Richtung mindestens einer Mobilstation in Aktivzustand übertragen werden, wenn die für die Mobilstation gespeicherten Verwaltungsinformationen Referenzen in Zusammenhang mit dem Dienst enthalten, von dem die Dienstmitteilungen abhängen, wobei die Referenzen von den Steuermitteln bei einer Verbindungsaufbauvorgehensweise empfangen werden, die die Mobilstation auf aktiven Zustand übergehen ließ.

2. Verfahren nach Anspruch 1, bei dem mindestens bestimmte der Mitteilungen ferner von mindestens einer der Basisstationen verteilt werden, um von Mobilstationen im Standbyzustand empfangen zu werden.

3. Verfahren nach Anspruch 1 oder 2, bei dem die Referenzen in Zusammenhang mit mindestens einem der Dienste von der Mobilstation (1) an die Steuermittel (10) über eine Signalisierungsfunkverbindung mit der Basisstation (9) geliefert werden.

4. Verfahren nach Anspruch 3, bei dem die Referenzen in Zusammenhang mit mindestens einem der Dienste von der Mobilstation in verschlüsselter Form geliefert werden.

5. Verfahren nach einem der Ansprüche 1 bis 4, bei dem die Referenzen in Zusammenhang mit mindestens einem der Dienste den Steuermitteln (10) ausgehend von einem Umschalter (4, 5) des Netzwerkkerns (3) an die Steuermittel (10) geliefert werden.

6. Verfahren nach einem der Ansprüche 1 bis 5, bei dem die Referenzen in Zusammenhang mit mindestens einem der Dienste den Steuermitteln (10) als Antwort auf eine Abfrage eines Servers, die unter Identifikation der Mobilstation (1) erfolgt ist, geliefert werden.

7. Verfahren nach einem der Ansprüche 1 bis 6, bei dem die Referenzen in Zusammenhang mit mindestens einem der Dienste für eine Mobilstation eine Adresse aufweisen, die die Mobilstation in Aktivzustand (1) oder eine Gruppe von Mobilstationen, zu welchen sie gehört, identifiziert, und bei dem die Adresse von einem Umschalter (4, 5) des Netzwerkkerns (3) in einer Mitteilung eingeschlossen wird, die den Steuermitteln (10) gesendet wird, um die Verteilung und/oder Übertragung einer Mitteilung, die von dem Dienst abhängt, zu steuern.

8. Verfahren nach Anspruch 7, bei dem die Mitteilungen, die von mindestens einem Dienst abhängen, für den die Steuermittel (10 der Basisstation Referenzen speichern, die eine Adresse enthalten, von der Basisstation (9) an die Mobilstation in Aktivzustand (1) übertragen werden, ohne verteilt zu werden.

9. Verfahren nach einem der Ansprüche 1 bis 8, bei dem die Mitteilungen, die von mindestens einem der Dienste abhängen, sowohl von der Basisstation (9) verteilt als auch an jede Mobilstation in Aktivzustand (1), für die die Steuermittel (10) der Basisstation Referenzen in Zusammenhang mit dem Dienst speichern, übertragen werden.

10. Verfahren nach einem der Ansprüche 1 bis 9, bei dem die Mobilstation in Aktivzustand (1) eine Mobilausstattung aufweist, die mehrere Abonnements unterstützt, und bei dem, da die Mobilstation gegenüber einem der Abonnements aktiv ist, die von der Basisstation (9) zu der Mobilstation übertragenen Mitteilungen Mitteilungen enthalten, die von mindestens einem Dienst abhängen, der mit einem anderen der Abonnements verbunden ist.

11. Verfahren nach einem der Ansprüche 1 bis 10, bei dem die Mobilstation in Aktivzustand (1) beim Empfangen einer Mitteilung, die von einem der Dienste abhängt, eine Antwort auf die Mitteilung auf einer Kommunikationsressource, die im Laufe der Verbindungsaufbauvorgehensweise, die die Mobilstation auf Aktivzustand übergehen ließ, erstellt wurde, zurückreicht.

12. Ausstattung eines Zugangsnetzwerks (8) einer Funkkommunikationsinfrastruktur, die Mittel (10) zum Steuern mindestens einer Basisstation des Zugangsnetzwerks (8) aufweist, wobei die Steuermittel Mittel (14, 16) zum Überwachen von Funkverbindungen aufweist, die eingerichtet sind, um Informationen zu speichern, die jeweils zu Mobilstationen in Aktivzustand (1) gehören, die von der Basisstation (9) bedient werden, und Mittel zum Befehlen der Verteilung durch die Basisstation von Meldungen, die von mindestens einem Dienst abhängen, der in Zusammenhang mit Mobilstationen in Standbyzustand geliefert wird, für die die Überwachungsmittel der Funkverbindungen keine Informationen speichern, **dadurch gekennzeichnet, dass** die von den Überwachungsmitteln der Funkverbindungen zu speichernden Informationen für mindestens eine Mobilstation in Aktivzustand eine Liste Referenzen in Zusammenhang mit Diensten aufweisen, die in Zusammenhang mit Mobilstationen in Standbyzustand geliefert werden, wobei diese Liste an die Überwachungsmittel für Funkverbindungen bei einer Verbindungsaufbauvorgehensweise, die die Mobilstation in Aktivzustand übergehen lässt, gerichtet werden, und **dadurch gekennzeichnet, dass** sie ferner Mittel zum Steuern des Sendens durch die Basisstation von Mitteilungen, die von Diensten abhängen, auf die sich die Referenzen der Liste beziehen, und insbesondere in Richtung einer Mobilstation in Aktivzustand, für die die Überwachungsmittel für Funkverbindungen eine Referenzenliste speichern, aufweist.

13. Ausstattung nach Anspruch 12, bei der die gespeicherten Referenzen für mindestens einen der Dienste eine Adresse aufweisen, die die Mobilstation in Aktivzustand (1) oder eine Gruppe von Mobilstationen, zu welchen sie gehört, identifiziert, und in der die Überwachungsmittel (14, 16) eingerichtet sind, um einen Umschalter (4, 5) eines Netzwerkkerns (3) der Funkverbindungsinfrastruktur aufzunehmen, wobei Steuermitteilungen, die den Dienst betreffen, jeweils eine Adresse enthalten, die mit den gespeicherten Adressen vergleichbar ist, und zum Steuern der Übertragung einer Mitteilung, die von dem Dienst abhängt, wenn die Adresse, die in einer empfangenen Steuermitteilung enthalten ist, und die gespeicherte Adresse, die die Mobilstation in Aktivzustand identifiziert, übereinstimmen.

14. Ausstattung nach Anspruch 13, bei der die Adresse eine ständige Identität eines Mobilabonnenten (IMSI) ist.

15. Ausstattung nach einem der Ansprüche 12 bis 14, bei der, wenn die Mobilstation in Aktivzustand (1) eine Mobilausstattung aufweist, die mehrere Abonnenten unterstützt, und die in Bezug auf einen der Abonnenten aktiv ist, die von der Basisstation spezifisch an die Mobilstation übertragenen Mitteilungen Mitteilungen enthalten, die von mindestens einem Dienst abhängen, der mit einem anderen der Abonnenten verbunden ist.

16. Funkkommunikationsmobilstation (1) in einer Funkkommunikationsinfrastruktur, die einerseits einen Netzwerkkern (3) und andererseits einen Netzwerkzugang (8) aufweist, **dadurch gekennzeichnet, dass** sie Mittel aufweist, um zur Funkkommunikationsstruktur bei einer Verbindungsaufbauvorgehensweise, die die Mobilstation in Aktivzustand übergehen lässt, eine Liste Referenzen in Zusammenhang mit Diensten, die in Zusammenhang mit Mobilstationen in Standbyzustand geliefert werden, zu senden, damit das Zugangsnetzwerk (8) der Infrastruktur diese berücksichtigen kann, um der Mobilstation in Aktivzustand Mitteilungen zu senden, die von Diensten abhängen, für die in der Liste Referenzen stehen; und **dadurch**, dass sie Dienste in Übereinstimmung mit einem Verfahren nach Anspruch 3 oder 4 liefern kann.

17. Mobilstation nach Anspruch 16, bei der die Referenzen in Zusammenhang mit mindestens einem der Dienste eine Adresse aufweisen, damit das Zugangsnetzwerk (8) diese Adresse mit einer Adresse vergleichen kann, die es in einer Sendeanfrage für eine Mitteilung, die von einem referenzierten Dienst abhängt, empfängt, damit die Mitteilung bei Übereinstimmung der Adressen übertragen wird.

18. Mobilstation nach Anspruch 17, bei der die Adresse eine ständige Mobilabonnentenidentität (IMSI) ist.

19. Mobilstation nach einem der Ansprüche 16 bis 18, bei der die Mittel eingerichtet sind, um die gesendete Referenzenliste zu verschlüsseln.
